# EUROPEAN PATENT SPECIFICATION

(11) **EP 1 861 229 B1**
(45) Date of publication and mention of the grant of the patent: **04.05.2011**
(21) Application number: 06709979.6
(22) Date of filing: 03.03.2006
(51) Int. Cl.: B25J 1/04, A47G 7/02, A47F 13/06

(54) **A LIFTING DEVICE**
HEBEVORRICHTUNG
DISPOSITIF DE LEVAGE

(30) Priority: 05.03.2005 GB 0504621
(43) Date of publication of application: 05.12.2007
(73) Proprietor: Stone, Mark Andrew., Belper Derbyshire DE56 1HN (GB)
(72) Inventor: Stone, Mark Andrew., Belper Derbyshire DE56 1HN (GB)
(74) Representative: Blower, Timothy John
(86) International application number: PCT/GB2006/000755
(87) International publication number: WO 2006/095141

(56) References cited:
- FR-A- 2 146 140
- FR-A- 2 622 389
- GB-A- 2 414 379
- US-A- 460 686
- US-A- 793 512

## Description

The present invention relates to lifting devices, particularly but not exclusively lifting devices for positioning items such as plant containers on locations such as hangers, brackets or the like.

Items such as plant containers are frequently mounted to overhead locations such as brackets mounted on lampposts. The act of installing the plant container is potentially hazardous. Plant containers used in public places can be relatively large and unwieldy. For fixing such containers in an overhead location, a ladder is often used. The use of ladders in public places can be hazardous for members of the public and to traffic, but also members of the public and traffic can be hazardous to users of the ladder. An alternative to the use of a ladder is to use a mobile hydraulic platform. However, such platforms are expensive to hire, and disruptive to traffic flow and/or pedestrians.

U.K. patent application no. 0409971 describes article mounting apparatus for mounting plant containers to lampposts. Such article mounting apparatus requires a user to position a container on a bracket and then move the container to a locked position by a lateral movement of the container. In the locked position the container cannot easily be pushed upwardly off the bracket by, for example, vandals.

French Patent Application No. 2146140 discloses a gripping device for lifting items such as boxes down from heights or locations out of reach, the gripping device including a support which in use applies a lifting force to lift the item and securing means for securing the item to the support, the securing means being arranged to apply in use a seating force to seat the item on a location, and being arranged so that the seating force must be applied to release the item from the support, the securing means including a securing member, the securing member being moveable relative to the support between a securing position and a release position, the device including a handle for gripping by a user, and a mounting for mounting the securing member to the support. In the arrangement disclosed, the securing member is pivotally mounted to the support, permitting a user to capture a box or release a box without applying a significant seating force to seat the item on the location.

According to the present invention, there is provided a lifting device as defined in claim 1 of the claims. The lifting device may include other features as defined in the dependant claims.

The present invention will now be described, by way of example only and with reference to the accompanying drawings, in which:-
Fig. 1 is a perspective view of a known plant container;
Fig. 2 is another perspective view of the plant container of Fig.1;
Fig. 3 is a perspective view of a known bracket;
Fig. 4 is a sectional side view of the container of Figs. 1 and 2 mounted to the bracket of Fig. 3;
Fig. 5 is a perspective view from the front, one side and above of a lifting device according to the invention;
Fig. 6 is a perspective view from the rear, above and the other side of the lifting device of Fig. 5;
Fig. 7 is a side view of the lifting device of Figs. 5 and 6;
Fig. 8 is a perspective view from the rear, above and other side of the lifting device and the plant container of Figs. 1 and 2;
Fig. 9 is a perspective view from the front, one side and above of the lifting device and the container;
Fig. 10 is a perspective view of the lifting device and container in a release position;
Fig. 11 is a side view of the lifting device, container and bracket in use.

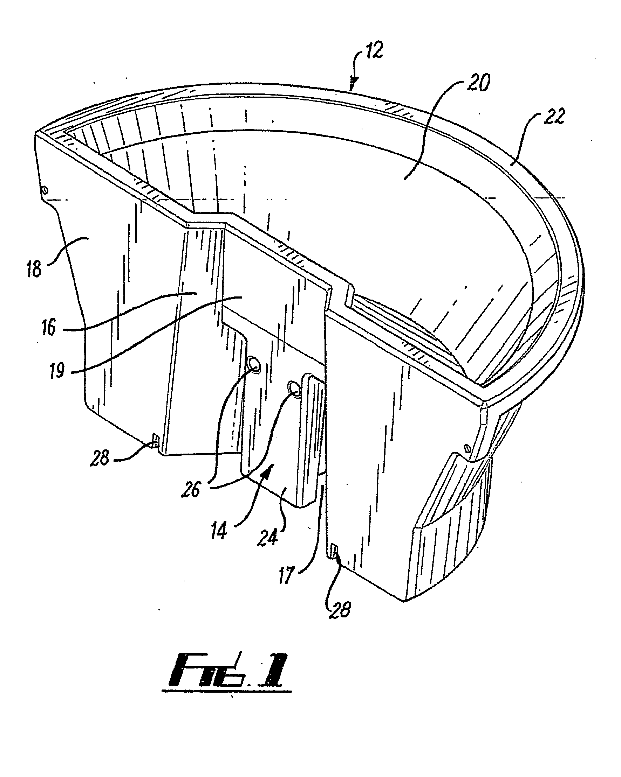

Figs. 1 to 4 show an example of known article mounting apparatus including a plant container 10 and a post bracket 40, which is the subject of the applicants U.K. patent application no. 4409971.9.

The plant container 10 includes a body 12. The body 12 includes a rear wall 18, a semi-circular front wall 22 and a base 32, which together define an interior 20. Each wall 18, 22, 32 is double skinned, defining an enclosed cavity therebetween, a lower part of which cavity forms a water reservoir 21. Such containers are commonly called "self watering containers". Such containers include filling means in the form of a filling aperture (not shown) defined in the outer skin of the semi circular front wall 22 to allow filling and replenishment of the water in the water reservoir 21. In use, the interior 20 is filled with plant compost and plant material, and a capillary means such as capillary matting is provided between the water reservoir 21 and the interior 20 to allow the plants planted in the interior 20 to draw up water from the water reservoir 21.

The container 10 is formed of plastics material, and more particularly is formed of polyethylene, and is formed by rotational moulding.

The rear wall 18 includes a recess 16. The in use upper part of the recess 16 is relatively shallow having an upper recess rear wall 19. The lower part 17 of the recess 16 is deeper than the upper part, extending further into the container 10.

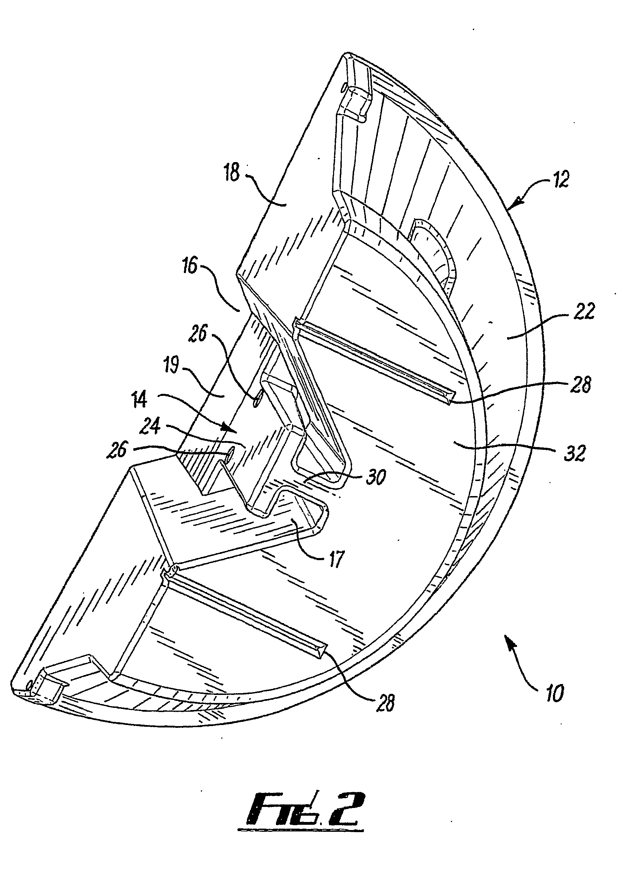

The container 10 includes a container bracket 14 which includes an engaging projection 24 extending downwardly from the upper recess rear wall 19 into the deeper recess 17. A web 30 extends from the engaging projection 24 to the rear wall 18 in the deeper recess 17. As shown most clearly in Fig. 2, the engaging projection 24 and the web 30 form a T shape when viewed from below.

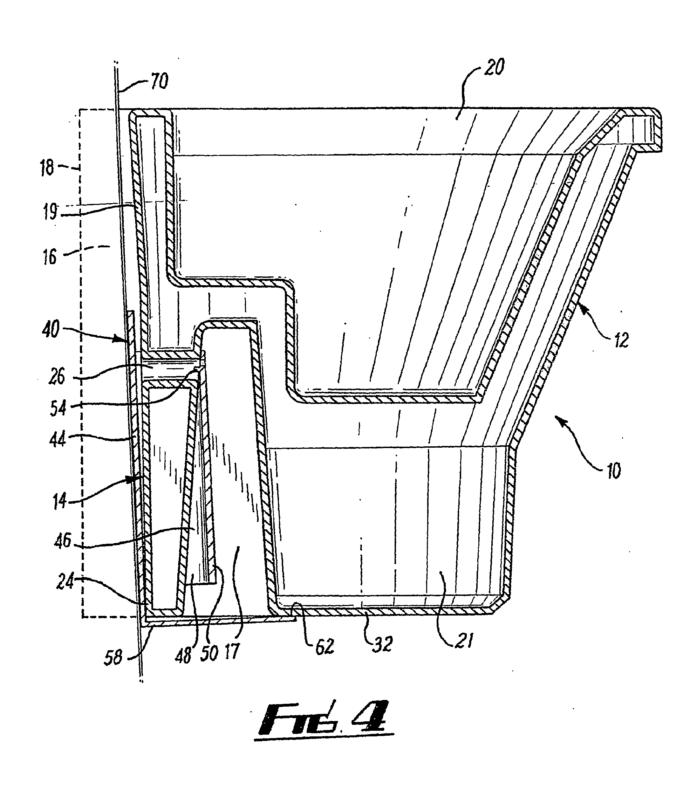

As shown most clearly in Figs. 2 and 4, the engaging projection tapers inwardly downwardly from the upper recess rear wall 19.

The engaging projection 24 defines a pair of parallel through passages 26 which extend from front to rear of the engaging projection 24 and are located in the upper part of the engaging projection 24.

The base 32 defines a pair of parallel channels 28 which extend from the rear wall 18 close to the recess 16, with one channel on either side of the recess 16. The channels 28 extend substantially across most of the width of the base 32.

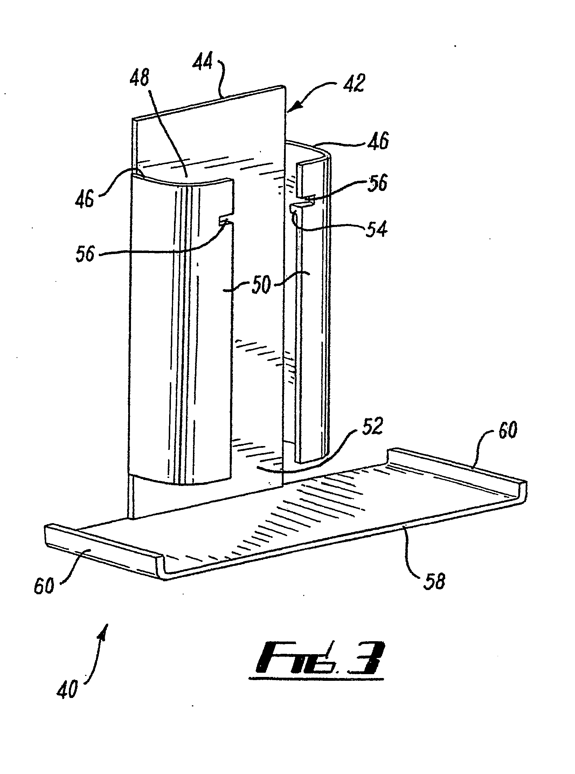

Fig. 3 shows a post bracket 40 having a body 42, the body 42 including a mounting member 44 in the form of a generally rectangular planar plate. A pair of spaced, substantially parallel side members 46 extend forwardly from the plate 44. Each side member 46 includes a lip 50, each lip 50 extending inwardly towards the other lip 50 of the other side member 46. Together, the mounting member 44, the side members 46 and the lips 50 define a channel 48. A mouth 52 is defined between the lips 50.

Each lip 50 includes a locking projection in the form of a lug 54 which extends backwardly into the channel 48. The lugs 54 are located towards the upper end of the lips 50 in use.

A generally rectangular planar support member 58 extends substantially horizontally in use and forwardly from a lower edge of the mounting member 44. The support member 58 extends outwardly on either side of the mounting member 44. At each side edge of the support member 58, the support member 58 extends upwardly to form a rim 60.

The post bracket 40 is fabricated from steel. The lugs 54 are formed by cutting and bending of the lips 50, which forming process results in the formed apertures 56. After fabrication, the post bracket 40 is finished with a suitable protective coating.

Fig. 4 shows the apparatus in use. The post bracket 40 is mounted by conventional means to a ground engaging support member in the form of a lamppost 70, so that the plane of the mounting member 44 is substantially vertical, and the plane of the support member 58 is substantially horizontal. The plant container 10 is located over the post bracket 40 and moved in a substantially vertical downward direction so that the engaging projection 24 is received in the channel 48. Movement continues until the container 10 locates on the support member 58. In this position, the engaged position, the engaging projection 24 is engaged within the bracket 40 and the web 30 extends through the mouth 52, but the lugs 54 are not within the passages 26.

The container 10 is then pivoted about a pivot point 62 which is located on the support member 58. The container 10 pivots forwardly and downwardly so that the upper part of the engaging projection 24 moves forwardly within the channel 48 to a locked position in which the passages 26 receive the lugs 54, as shown in Fig. 4.

In the locked position, each lug 54 is received in the corresponding passage 26 so that if an attempt is made to move the container 10 vertically upwards to dislodge the container 10 from the post bracket 40, the location of the lugs 54 in the passages 26 prevents the upward movement.

The taper of the engaging projection 24 allows ease of manufacture, and also aids location of the engaging projection 24 in the channel 48. The engaging projection 24 is arranged to fit within the channel 48 so that only a relatively small pivotal movement of the container 10 is required to engage the lugs within the passages 26.

As the engaging projection 24 locates within the channel 48, the upturned rims 60 of the support member 58 locate in the channels 28 of the base 32 of the container 10.

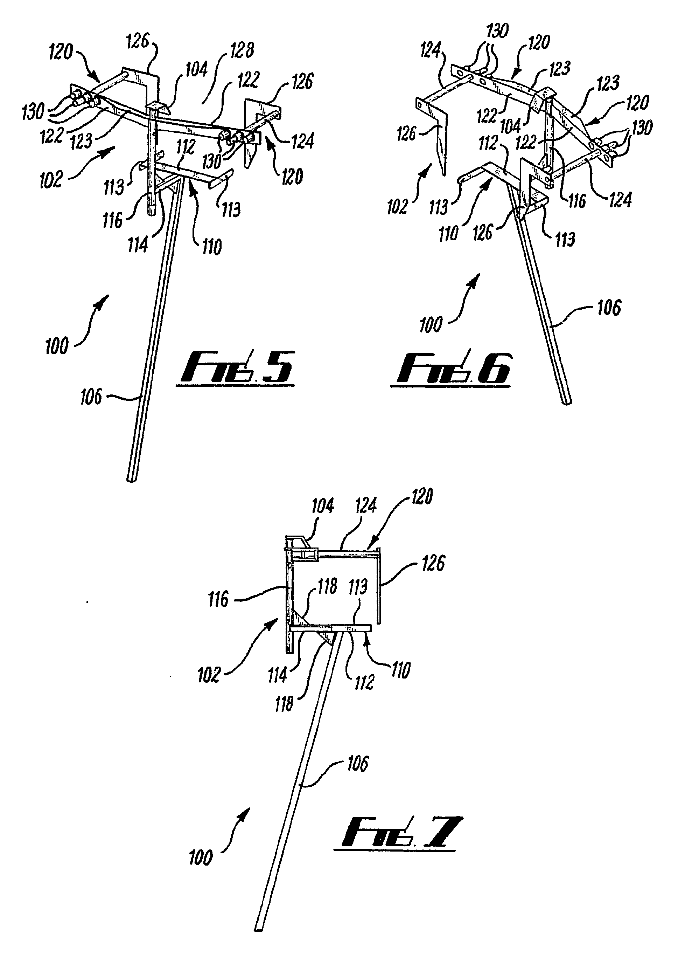

Figs. 5-11 show an example of a lifting device 100 in accordance with the present invention. Figs. 5-7 show the lifting device 100 in an empty condition. The lifting device 100 includes a support in the form of a frame 102, securing means including a securing member in the form of a hook 104, and a handle 106. The frame 102 includes a base 110, the base 110 comprising a substantially planar base plate 112. Generally in use, the plane of the base plate 112 is substantially horizontal.

The handle 106 extends downwardly from the base plate 112, When viewed from the side, as shown in Fig. 7, the handle 106 extends downwardly at an angle to the plane of the base plate 112 of between 70 and 80°. The base 110 includes a pair of spaced substantially parallel rails 113 which extend rearwardly and horizontally in use from each of the side ends of the base plate 112. The base 110 includes a base bar member 114 which extends forwardly and substantially horizontally from the junction between the handle 106 and the base plate 112.

The frame 102 includes a spacer in the form of a substantially upright tubular support member 116, which extends from the forward end of the base bar member 114. The frame 102 further includes a pair of spaced arms 120 which extend outwardly and rearwardly from the upright support member 116. The support member 116 spaces the arms 120 from the base plate 112. Each of the arms 120 includes a front arm member 122 which extends outwardly from the support member 116 and substantially mutually oppositely from the other front arm member 122, a side arm member 124 extending rearwardly from each of the front arm members 122, and substantially mutually in parallel with the other side arm member 124, and a rear arm member 126 extending inwardly from each of the side arm members 124 towards the other rear arm member 126. A lip 123 extends forwardly from a portion of the upper edge of each of the front arm members 122, the lips 123 providing additional strength and rigidity.

The rear arm members 126 are L-shaped, extending firstly inwardly from the side arm members 124 and then downwardly towards the plane of the base plate 112. The rear arm members 126 define a gap 128 therebetween. The front arm members 122, side arm members 124 and the inwardly extending parts of the rear arm members 126 are substantially coplanar, and parallel with the plane of the base plate 112.

Triangular bracing fillets 118 are provided between the handle 106 and the base bar 114, and between the base bar 114 and the upright support member 116. The bracing fillets 118 provide additional rigidity and strength.

The lifting device 100 includes adjustment means in the form of a plurality of sockets 130 located at the outer ends of the front arm members 122. The sockets 130 receive the side arm members 124. In the example shown in Figs. 5 - 7, three sockets 130 are provided at each end of the front arm members 122, and each side arm member 124 is positioned within the middle of the three sockets 130. Each socket 130 includes a pair of opposed apertures (not shown) and each of the side arm members 124 includes a passage (not shown). In an assembled condition, a pin (not shown) extends through the apertures of the sockets 130 and the passage of the side arm member 124, to lock the side arm member 124 in position in the socket 130. The side arm members 124 can be readily repositioned in any of the sockets 130 to accommodate different size containers. Each of the side arm members 124 could also include a plurality of spaced passages, to accommodate containers having different dimensions front to back.

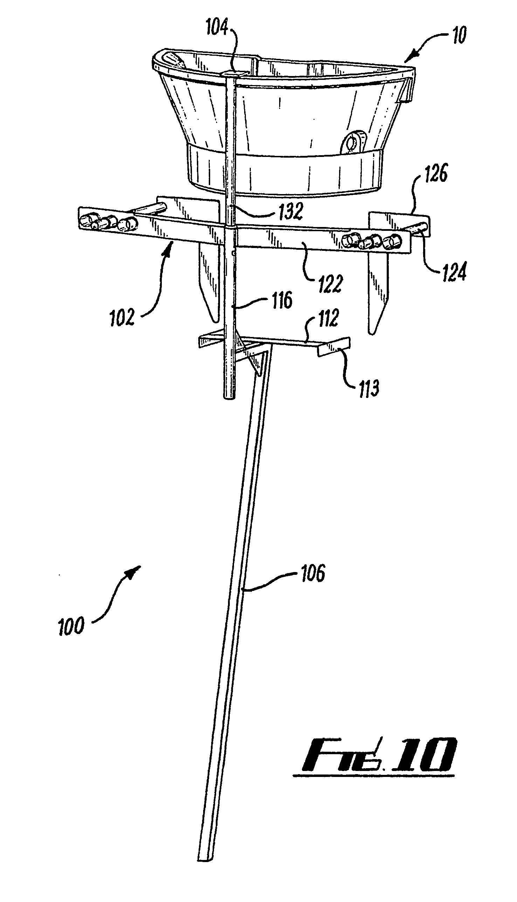

The hook 104 is mounted on a hook mounting member 132, as shown most clearly in Fig. 10. The hook mounting member 132 is slidably received within the tubular upright support member 116, thus providing a telescopic mounting for the hook 104. The hook 104 is movable between a securing position in which the hook mounting 132 member is substantially retracted within the upright support member 116, and a release position, in which the hook mounting member 132 is fully extended from the upright support member 116. A stop (not shown) is provided to limit the extension of the hook mounting member 132.

The lifting device 100 can be easily fabricated by conventional methods from standard mild steel stock and finished by powder coating, galvanising and/or painting. Alternatively, any other suitable material, joining methods and finish could be used.

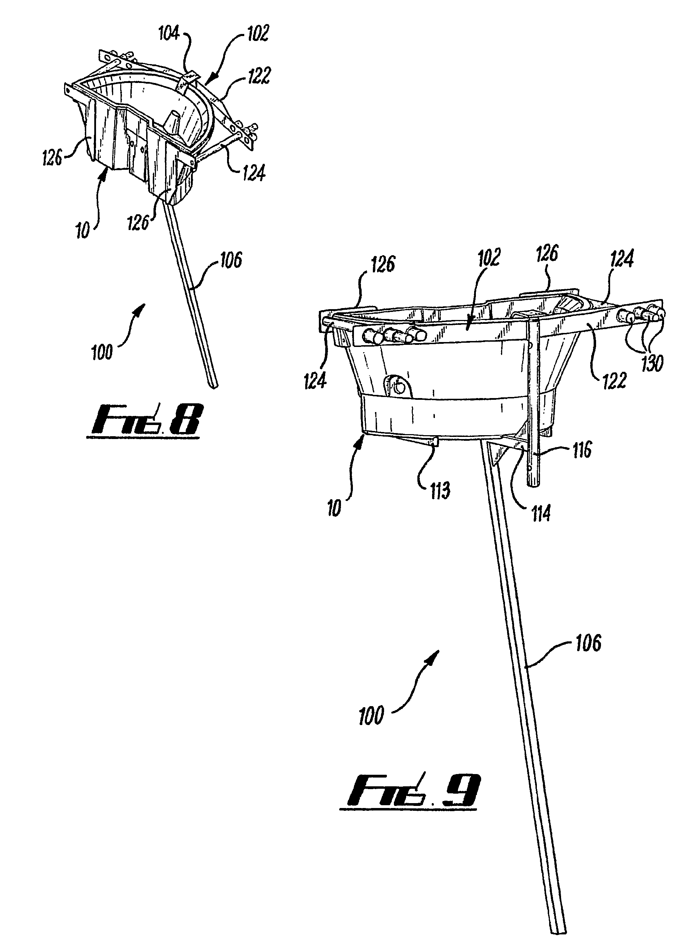

Figs. 8-11 show the lifting device 100 in use. In the example shown in these figures, the item is the plant container 10 as described in U.K. patent application no. 0409971 and in Figs. 1-4 above. Initially, the base 32 of the container 10 is positioned on the base plate 112 of the lifting device 100 between the arms 120. To position the container 10 on the lifting device 100, the hook mounting member 132 must be extended to the release position. With the container 10 in position on the base plate 112, the hook mounting member 132 is then retracted into the upright support member 116, so that the hook 104 hooks over the front wall 22 of the container 10 and into the interior 20 of the container 10, as shown in Figs. 8 and 9. The side arm members 124 can be repositioned in the sockets 130 as required to accommodate the container 10.

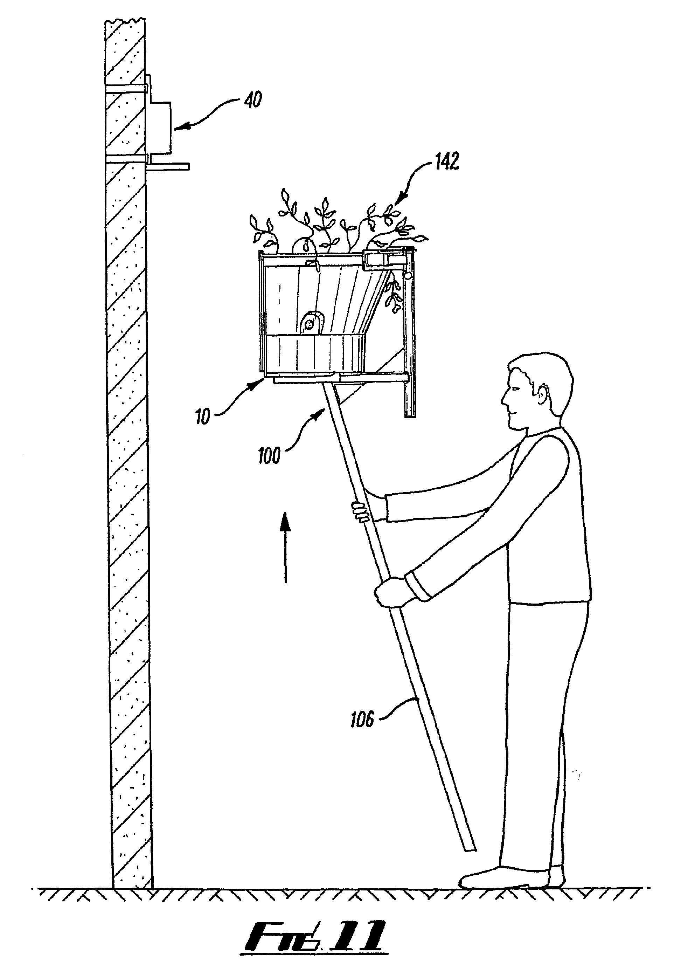

As shown in Fig. 11, in use the container 10 may be filled with material such as potting compost and plants 142, but without water in the reservoir 21 to reduce the weight to be lifted. The user grips the handle 106 and lifts the container 10 upwardly towards the bracket 40 thus applying a lifting force to the container 10 through the frame 102.

During lifting, the frame 102 provides support underneath and at the front and back for the container 10, ensuring a safe and secure lift. The hook 104 secures the container 10 to the frame 104, substantially preventing movement of the container 10 relative to the frame 102, and in particular substantially preventing an upward movement of the container 10 relative to the frame 102.

The user manipulates the lifting device 100 so that the engaging projection 24 of the container bracket 14 locates within the channel 48 of the bracket 40, as described above. To release the container 10 from the lifting device 100, the user then exerts a pulling or seating force downwardly via the handle 106, so that the hook mounting member 132 is extended from the upright support member 116 by the reaction force applied by the container 10 to the hook 104. The frame 102 moves downwardly and can then be moved forwardly clear of the container 10. The gap 128 between the rear arm members 126 is sized to permit the widest part of the bracket 40 to pass therethrough. Once the frame 102 is clear of the container 10, the lifting device 100 can then be moved upwardly to disengage the hook 104 from the container wall 22.

As the user pulls downwardly on the handle 106 to extend the hook support member 132, the container 10 is caused to pivot laterally forwardly and downwardly to the locked position, in which the passages 26 receive the lugs 54. Thus the operation of the lifting device 100 causes the plant container 10 to be seated on the location in the locked position.

The hook mounting member 132 could be arranged to retract back into the upright support member 116 when the lifting device 100 is in a generally upright position, the force of gravity providing a biasing means to bias the hook 104 to the securing position. Alternatively, the hook mounting member 132 could be lubricated, and could require a force provided by a user to move the hook 104 to the securing position. As a further alternative, a biasing means such as a spring could be provided to bias the hook 104 to the securing position.

The rails 118 are equally spaced from the handle 106 and correspond with the upturned rims 60 of the bracket 40. The user, looking from the front and below at the underneath of the bracket 40 and device 100, can thus align the container 10 to the bracket 40 by aligning the rails 113 with the rims 60, the rails 113 thus providing alignment means.

The angle of the handle 106 to the base plate 112 enables the user when lifting and positioning the container to be standing forwardly of the container, providing a better view and a safer securing position should material fall from the container 10 or bracket 40. The handle 106 could be between 1.5 and 2.5m long.

Various other modifications may be made without departing from the scope of the invention. The orientation of the support relative to the handle could be different. The arrangement of the support could be different. The mounting of the hook could be different. The arrangement of the hook relative to the support may be different, and a plurality of hooks may be provided.

There is thus provided a lifting device which permits the positioning of an item such as a plant container on an overhead location such a as bracket mounted on a lamppost without requiring the user to leave the ground by means of, for instance, a ladder or hydraulically powered lifting platform. The lifting device enables the positioning of the container accurately and quickly, with minimal disruption to traffic or other street, road or pathway users. The movable hook is arranged to ensure that the container is correctly seated on the bracket, and when used in combination with the article mounting apparatus of GB0409971, the lifting device ensures that the container is mounted in the locked position. The lifting device is relatively simple and light, and does not require a power supply.

Although the device has been described by reference to the article mounting apparatus of GB0409971, the device of the invention could be used for lifting any suitable item on to any suitable location, and particularly where a force is required to seat the item on the location or to ensure the item is seated on the location. The device provides the advantage that the item cannot be released from the device without the seating force being applied, so ensuring that the item is securely seated on the location even if the device is being used by an untrained, unsupervised or inexperienced user.

## Claims

1. A lifting device (100) for positioning an item (10) on a location (40), the item being a plant container, the location being a bracket or hanger, the device including a support (102) which in use applies a lifting force to lift the item and securing means (104) for securing the item to the support, the securing means being arranged to apply in use a seating force to seat the item on the location, and being arranged such that the seating force must be applied to release the item from the support, the securing means including a securing member (104), the securing member being movable relative to the support between a securing position and a release position, the device including a handle (106) for gripping by a user, and a mounting (132) for mounting the securing member to the support, **characterised in that** the mounting is telescopic, so that in the securing position the telescopic mounting is retracted and in the release position the telescopic mounting is extended.

2. A lifting device according to claim 1, in which, in use, as the seating force is applied, the securing member is caused to move from the securing position to the release position by a force applied in reaction to the seating force.

3. A lifting device according to claims 1 or 2, in which in the securing position, the item is located between the securing member and the support, and the securing member is arranged to substantially prevent movement of the item relative to the support.

4. A lifting device according to any of the preceding claims, in which the device is arranged so that the securing member secures the item to the support while the support applies the lifting force.

5. A lifting device according to any of the preceding claims, in which the lifting force is applied in a first direction, which is generally upwardly.

6. A lifting device according to claim 5, in which the seating force is applied in a second direction which is generally downwardly.

7. A lifting device according to any of the preceding claims, in which the seating force when applied causes the item to move laterally.

8. A lifting device according to any of the preceding claims, in which the device is arranged so that the seating force is applied after the lifting force.

9. A lifting device according to claim 8, in which the device is arranged so that the seating force is applied when the lifting force is no longer being applied.

10. A lifting device according to any of the preceding claims, in which the telescopic mounting includes biasing means, which bias the securing member to the securing position.

11. A lifting device according to any of the preceding claims, in which the securing member includes a hook (104).

12. A lifting device according to any of the preceding claims, in which the handle extends downwardly from the support.

13. A lifting device according to any of the preceding claims, in which the support includes a frame (102), which includes a base (112) and a pair of spaced arms (120), the arms together extending substantially around the item in use, a gap (128) being defined between the free ends of the arms.

14. A lifting device according to claim 13, in which the frame includes adjustment means (130) for adjusting the spacing of the arms.

15. A lifting device according to claims 13 or 14, in which the frame includes a spacer (116) for spacing the arms from the base.

16. A lifting device according to any of the preceding claims, in which the device includes alignment means (118) for aligning the item on the location.

## Patentansprüche

1. Hubgerät (100) zum Positionieren eines Objekts (10) auf einem Standort (40), wobei das Objekt ein Pflanzgefäß ist, der Standort eine Halterung oder eine Hängevorrichtung ist, wobei das Gerät eine Stütze (102) enthält, die im Gebrauch eine Hubkraft ausübt, um das Objekt zu heben, sowie eine Sicherungseinrichtung (104) zum Sichern des Objekts an der Stütze enthält, wobei die Sicherungseinrichtung so ausgelegt ist, dass sie im Gebrauch eine Aufsetzkraft ausübt, um das Objekt auf dem Standort aufzusetzen, und wobei sie so ausgelegt ist, dass die Aufsetzkraft ausgeübt werden muss, um das Objekt aus der Stütze zu lösen, wobei die Sicherungseinrichtung ein Sicherungselement (104) enthält, wobei das Sicherungselement bezogen auf die Stütze beweglich ist zwischen einer Sicherungsposition und einer Freigabeposition, wobei das Gerät einen Handgriff (106) zum Ergreifen durch einen Benutzer sowie eine Befestigung (132) zum Befestigen des Sicherungselements an der Stütze enthält, **dadurch gekennzeichnet, dass** die Befestigung teleskopartig ist, so dass die teleskopartige Befestigung in der Sicherungsposition eingefahren ist und die teleskopartige Befestigung in der Freigabeposition ausgefahren ist.

2. Hubgerät gemäß Anspruch 1, wobei im Gebrauch beim Ausüben der Aufsetzkraft das Sicherungselement dazu gebracht wird, sich aus der Sicherungsposition in die Freigabeposition zu bewegen, und zwar durch eine Kraft, die als Reaktion auf die Aufsetzkraft ausgeübt wird.

3. Hubgerät gemäß Anspruch 1 oder 2, wobei sich das Objekt in der Sicherungsposition zwischen dem Sicherungselement und der Stütze befindet und das Sicherungselement so ausgelegt ist, dass es die Bewegung des Objekts bezogen auf die Stütze im Wesentlichen verhindert.

4. Hubgerät gemäß einem der vorherigen Anspruche, wobei das Gerät so ausgelegt ist, dass das Sicherungselement das Objekt an der Stütze sichert, während die Stütze die Hubkraft ausübt.

5. Hubgerät gemäß einem der vorherigen Ansprüche, wobei die Hubkraft in einer ersten Richtung ausgeübt wird, die allgemein eine Aufwärtsrichtung ist.

6. Hubgerät gemäß Anspruch 5, wobei die Aufsetzkraft in einer zweiten Richtung ausgeübt wird, die allgemein eine Abwärtsrichtung ist.

7. Hubgerät gemäß einem der vorherigen Ansprüche, wobei die Aufsetzkraft bei ihrer Ausübung bewirkt, dass das Objekt sich seitlich bewegt.

8. Hubgerät gemäß einem der vorherigen Ansprüche, wobei das Gerät so ausgelegt ist, dass die Aufsetzkraft nach der Hubkraft ausgeübt wird.

9. Hubgerät gemäß Anspruch 8, wobei das Gerät so ausgelegt ist, dass die Aufsetzkraft ausgeübt wird, wenn die Hubkraft nicht mehr ausgeübt wird.

10. Hubgerät gemäß einem der vorherigen Ansprüche, wobei die teleskopartige Befestigung eine Vorspannungseinrichtung enthält, welche das Sicherungselement in die Sicherungsposition vorspannt.

11. Hubgerät gemäß einem der vorherigen Ansprüche, wobei das Sicherungselement einen Haken (104) enthält.

12. Hubgerät gemäß einem der vorherigen Ansprüche, wobei der Handgriff von der Stütze aus nach unten verläuft.

13. Hubgerät gemäß einem der vorherigen Ansprüche, wobei die Stütze einen Rahmen (102) enthält, welcher eine Basis (112) und ein Paar im Abstand zueinander angeordnete Arme (120) enthält, wobei die Arme zusammen im Wesentlichen um das in Gebrauch befindliche Objekt herum verlaufen, wobei ein Abstand (128) zwischen den freien Enden der Arme definiert ist.

14. Hubgerät gemäß Anspruch 13, wobei der Rahmen eine Einstelleinrichtung (130) zum Einstellen des Abstands der Arme enthält.

15. Hubgerät gemäß Anspruch 13 oder 14, wobei der Rahmen einen Abstandhalter (116) enthält, der die Arme in einem Abstand von der Basis hält.

16. Hubgerät gemäß einem der vorherigen Ansprüche, wobei das Gerät eine Ausrichtungseinrichtung (118) zum Ausrichten des Objekts auf dem Standort enthält.

## Revendications

1. Un dispositif de levage (100) pour positionner un élément (10) sur un emplacement (40), l'élément étant un contenant pour plante, l'emplacement étant un soutien ou une patère, le dispositif comprenant un support (102) qui lors de l'utilisation applique une force de levage pour lever l'élément et un moyen d'assujettissement (104) pour assujettir l'élément au support, le moyen d'assujettissement étant agencé pour appliquer lors de l'utilisation une force d'appui pour appuyer l'élément sur l'emplacement, et étant agencé de telle sorte que la force d'appui doive être appliquée pour libérer l'élément du support, le moyen d'assujettissement comprenant un membre d'assujettissement (104), le membre d'assujettissement étant mobile par rapport au support entre une position d'assujettissement et une position de libération, le dispositif comprenant une poignée (106) destinée à être serrée par un utilisateur, et une monture (132) destinée à monter le membre d'assujettissement sur le support, **caractérisé en ce que** la monture est télescopique, de façon à ce que dans la position d'assujettissement la monture télescopique soit rétractée et que dans la position de libération la monture télescopique soit étendue.

2. Un dispositif de levage selon la revendication 1, dans lequel, lors de l'utilisation, à mesure que la force d'appui est appliquée, le membre d'assujettissement est amené à se déplacer de la position d'assujettissement à la position de libération par une force appliquée en réaction à la force d'appui.

3. Un dispositif de levage selon les revendications 1 ou 2, dans lequel dans la position d'assujettissement, l'élément est situé entre le membre d'assujettissement et le support, et le membre d'assujettissement est agencé pour substantiellement empêcher le déplacement de l'élément par rapport au support.

4. Un dispositif de levage selon n'importe quelles revendications précédentes, dans lequel le dispositif est agencé de façon à ce que le membre d'assujettissement assujettisse l'élément au support tandis que le support applique la force de levage.

5. Un dispositif de levage selon n'importe quelles revendications précédentes, dans lequel la force de levage est appliquée dans une première direction, qui est généralement vers le haut.

6. Un dispositif de levage selon la revendication 5, dans lequel la force d'appui est appliquée dans une deuxième direction qui est généralement vers le bas.

7. Un dispositif de levage selon n'importe quelles revendications précédentes, dans lequel la force d'appui, lorsqu'elle est appliquée, amène l'élément à se déplacer latéralement.

8. Un dispositif de levage selon n'importe quelles revendications précédentes, dans lequel le dispositif est agencé de façon à ce que la force d'appui soit appliquée après la force de levage.

9. Un dispositif de levage selon la revendication 8, dans lequel le dispositif est agencé de façon à ce que la force d'appui soit appliquée quand la force de levage n'est plus appliquée.

10. Un dispositif de levage selon n'importe quelles revendications précédentes, dans lequel la monture télescopique comprend un moyen d'inclinaison, qui incline le membre d'assujettissement dans la position d'assujettissement.

11. Un dispositif de levage selon n'importe quelles revendications précédentes, dans lequel le membre d'assujettissement comprend un crochet (104).

12. Un dispositif de levage selon n'importe quelles revendications précédentes, dans lequel la poignée s'étend vers le bas à partir du support.

13. Un dispositif de levage selon n'importe quelles revendications précédentes, dans lequel le support comprend un cadre (102), qui comprend une base (112) et une paire de bras espacés (120), les bras ensemble s'étendant substantiellement autour de l'élément lors de l'utilisation, un espace (128) étant défini entre les extrémités libres des bras.

14. Un dispositif de levage selon la revendication 13, dans lequel le cadre comprend des moyens de réglage (130) pour régler l'espacement des bras.

15. Un dispositif de levage selon les revendications 13 ou 14, dans lequel le cadre comprend une entretoise (116) pour espacer les bras à partir de la base.

16. Un dispositif de levage selon n'importe quelles revendications précédentes, dans lequel le dispositif comprend un moyen d'alignement (118) pour aligner l'élément sur l'emplacement.
